# EUROPEAN PATENT APPLICATION

(11) **EP 2 363 442 A1**
(43) Date of publication of application: **07.09.2011**
(21) Application number: 11156758.2
(22) Date of filing: 03.03.2011
(51) Int. Cl.: C09J 125/04, C08J 5/12, C09J 153/02, C08K 5/00, C08K 5/01, C08K 5/04

(54) **Use of spray adhesive for bituminous waterproofing systems**

(30) Priority: 05.03.2010 EP 10155624
(71) Applicant: Icopal Danmark A/S, 2730 Herlev (DK)
(72) Inventor: Dujeancourt, Franck, 37270, St. Martin Le Beau (FR); Leleu, Christine, 41100, Aze (FR)
(74) Representative: Nilausen, Kim

(57) **Abstract**

The use of a composition comprising a styrene-domain-containing polymer or copolymer dissolved in a bitumen-compatible solvent for bonding a bituminous membrane or layer modified with SIS, SBS, SEBS or SB to a substrate composed of one or more material(s) selected from the group consisting of bituminous membranes and layers, synthetic and plastic membranes, insulation boards made from materials such as PUR, PIR, EPS, mineral or glass wool, concrete, cement, brick, wooden boards, or steel panels, provides a safe, waterproof adhesion of the bituminous membranes to the substrate within 2 to 15 minutes without causing phase separation of the bitumen.

## Description

The present invention relates to the use of a composition comprising a solution of a styrene-domain-containing polymer or copolymer for bonding a bituminous membrane or layer modified with a polymer or copolymer to a substrate and a method of bonding a bituminous membrane or layer modified with a polymer or copolymer to a substrate as well as a construct comprising a bituminous membrane or layer modified with a polymer or copolymer bonded to a substrate by a styrene-domain-containing polymer or copolymer.

### CROSS-REFERENCE TO RELATED APPLICATIONS

Not applicable.

### BACKGROUND OF THE INVENTION

### 1. Field of the Invention

Bituminous membranes are used widespread in the building industry for providing waterproof roofing or sealing.

The present invention relates to the use of an adhesive in the form of a solution of a styrene-domain-containing polymer or copolymer for bonding bituminous waterproofing membranes to various parts of a building such as roofing or foundations as well as in civil engineering such as bridges. This adhesive can be used for different stages of bonding, in full adhesion, in detailing, and closure of the side laps and the end overlaps and for applying patches.

### 2. Description of the Related Art

HU-A-51662 discloses adhesive compositions comprising bitumen, SBS and a solvent such as trichloro ethane or methylene chloride, which may be used for binding heat, sound or insulating plates. HU-A-51662 does not disclose a bituminous membrane or layer modified with a polymer or copolymer.

DD-A-271338 discloses adhesive compositions comprising bitumen, SBS and a solvent such as halo carbon hydrides or aromatic solvents, which may be used for binding heat, sound or insulating plates to bitumen-containing lengths. DD-A-272338 does not disclose a bituminous membrane or layer modified with a polymer or copolymer.

DD-A-295179 discloses adhesive compositions comprising bitumen, SBS and a solvent such as methylene chloride, which may be used for binding heat, sound or insulating plates to bitumen-containing lengths. DD-A-295179 does not disclose a bituminous membrane or layer modified with a polymer or copolymer.

US 2002/0161056 discloses an aerosol adhesive and canister aerosol polymeric based synthetic adhesives such as thermosetting adhesives, thermoplastic resins and elastomeric adhesives showing low emission of volatile organic compounds (VOC) during their use. This is obtained by using hexane/acetone blends instead of e.g. chlorinated solvents such as methylene chloride or mixtures of hydrocarbons such as propane, butane and isobutene as propellant gas. Thermoplastic rubbers are used to make contact and pressure sensitive adhesives which are stated to be applied to the laminate and to the particle board in which the laminate is to be mounted. The solvent is allowed to evaporate leaving behind the adhesive solids coated onto the laminate and the particle board. The two substrates are brought into contact with each other and bonding occurs. US 2002/0161056 does not mention bitumen or asphalt or a bituminous membrane or layer modified with a polymer or copolymer and teaches away from using dimethyl ether.

BE-A-1010685 Discloses the adhering an optionally reinforced polymer membrane such as EPDM, PVC, chlorinated PE or PIB to a substrate, using a contact adhesive which can comprise a solvent such as hexane, cyclohexane, butanone or ethyl acetate, and further SBS. BE-A-1010685 does not mention bitumen or asphalt, a bituminous membrane or layer modified with a polymer or copolymer or dimethyl ether or acetone

RU-C-2087507 Discloses the application of a composition containing butadiene methylstyrene rubber, sulphur and an organic solvent such as hexane or other saturated hydrocarbons between a primary insulating coating layer based on bitumen and rubber and a protection layer of PE. RU-C-2087507 does not mention a bituminous membrane or layer modified with a polymer or copolymer ether-type solvents or acetone.

North Star Chemicals: "StarStuck SG" Discloses the application of a contact adhesive composition containing hexane and acetone as solvent which composition may be applied as an aerosol for bonding expanded polystyrene or other substrates such as fabrics, upholstery, foam, cork and some plastics. That the surfaces to be joined must be free from dirt, grease, oils and any other solvents, which teaches away from using the composition for binding bituminous membranes.

It is an object of the invention to provide a spray adhesive for use in bonding of bitumen membranes in waterproofing systems to a substrate in order to avoid the use of hot bitumen for bonding a bituminous membrane or layer or patch modified with a polymer or copolymer to a substrate as working with melted bitumen is laborious and time consuming and it is difficult to control the extend of spreading of the hot bitumen. Furthermore, the use of hot bitumen either requires the use of naked flame for melting the bitumen or use of a melting boiler which may be problematic due to fire hazards e.g. when installing roofing felt or waterproofing membranes. Still further, in cold weather conditions the use of hot bitumen may also increase the risk of insufficient bonding and bonding failure, if the bitumen is not sufficiently hot.
Furthermore it is an object of the invention to avoid adhesives based on solutions comprising bitumen in order to avoid soiling of surfaces ajacent to the area to be glued.
Still further, it is an object of the invention to provide a spray adhesive which may be used for a precise, clean and quick application for the gluing in full area, for detailing, and closure side laps and overlaps and which can be provided in a canister.

It has now been found that a composition in the form of a solution of a styrene-domain-containing polymer or copolymer will meet the above-mentioned objects and may be used for bonding a bituminous membrane or layer modified with a polymer or copolymer to a substrate.

### SUMMARY OF THE INVENTION

The present invention relates in a first aspect to the use of a composition comprising a styrene-domain-containing polymer or copolymer dissolved in a bitumen-compatible solvent for bonding a bituminous membrane or layer modified with a polymer or copolymer to a substrate composed from one or more material(s) selected from the group consisting of bituminous membranes and layers, synthetic and plastic membranes, insulation boards made from materials such as PUR, PIR, EPS, mineral or glass wool, concrete, cement, brick, wooden boards, or steel panels.

In a second aspect the invention relates to a method of bonding a bituminous membrane or layer modified with a polymer or copolymer to a substrate composed from one or more materials selected from the group consisting of a bituminous membrane or layer, synthetic and plastic membranes, insulation boards made from materials such as PUR, PIR, EPS, mineral or glass wool, concrete, cement, brick, wooden boards, or steel panels, said method comprising the steps of:
(i) applying to one or both surfaces to be bonded together a composition of a styrene-domain containing polymer or copolymer in a mixture of a liquid linear, branched, or cyclic saturated or unsaturated hydrocarbon, an ether-type solvent, and a ketone-type solvent;
(ii) waiting for about 2 to 15 minutes;
(iii) bringing the surfaces into intimate contact; and optionally
(iv) applying a pressure to bring the bituminous membrane or layer modified with a polymer or copolymer into intimate contact with the substrate. In a third aspect the invention relates to a construct comprising a bituminous membrane or layer modified with a polymer or copolymer bonded to a substrate by a styrene-domain-containing polymer or copolymer dissolved in a bitumen-compatible solvent.

### Brief Description of the Drawings

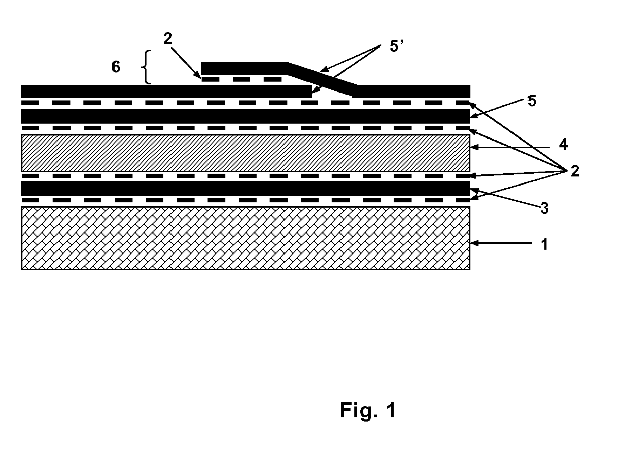

The invention is disclosed more in detail with reference to the drawings in which
Figure 1 shows an embodiment of a construct according to the invention.

### Detailed Description of the Present Invention

The present invention relates to the use of a composition comprising a styrene-domain-containing polymer dissolved in a bitumen-compatible solvent for bonding a bituminous membrane or layer modified with a polymer or copolymer to a substrate composed from one or more material(s) selected from the group consisting of bituminous membranes and layers, synthetic and plastic membranes, insulation boards made from materials such as PUR, PIR, EPS, mineral or glass wool, concrete, cement, brick, wooden boards, or steel panels.

It has been found that such a composition is extremely compatible with bituminous membranes and may be applied to bitumen surfaces to provide an adhesive surface without causing phase separation of the bitumen mixture and adhere the bituminous membranes safely to a substrate and ensure waterproof adhesion within 2 to 15 minutes, suitably within 10 to 15 minutes.

The composition may be applied rapidly and precisely within the desired areas for the gluing in full area, for detailing, and closure side laps and overlaps and provide excellent waterproofing properties.

The composition may be provided in a canister being simple to transport and immediately ready for use.

It has been found that such a composition provides very good properties of the resulting bonding when the bituminous membrane or layer comprises bitumen modified with copolymers such as SIS, SBS, SEBS or SB.

It has also been found that such a composition is very suitable for gluing all type of insulation boards made from materials such as polyurethane (PUR), polyisocyanurate (PIR), expanded polystyrene (EPS), mineral wool and glass wool and thus may be used generally as an overall material for providing adhesion between materials to be united at a construction site, without damaging the materials in case they are sensitive to solvents.

Furthermore, it has been found that the composition may be applied during the manufacturing of the bituminous membranes and covered by a release film or release paper known per se and exposed by removing the protection just before use.

In addition the composition may function as a primer in combination with self-adhesive bituminous membranes which is also considered an aspect of the present invention.

Furthermore, it has been found that when using a solution of a styrene-domain-containing polymer or copolymer an exceptional mechanical performance on bitumen covered with acrylic coating and in association with bitumen modified polymer is obtained.

The styrene-domain-containing polymer or copolymer may be a homopolymer or a block copolymer, or a mixture of a homopolymer and di or tri-block copolymer, said polymers comprising e.g.
(a) polymers derived from styrene of the below formula I;
(b) copolymers derived from styrene of the below formula I and isoprene of the formula II;
(c) copolymers derived from styrene of the below formula I and 1,3-butadiene of the formula III
(d) copolymers derived from styrene of the below formula I, isoprene of the below formula II and styrene of the below formula I (SIS),
(e) copolymers derived from styrene of the below formula I, butadiene of the below formula III and styrene of the below formula I (SBS),
(f) copolymers derived from styrene of the below formula I, ethylene of the below formula IV, butadiene of the below formula III and styrene of the below formula I (SEBS), or
(g) copolymers derived from styrene of the below formula I, butadiene of the below formula III and isoprene of the below formula II.

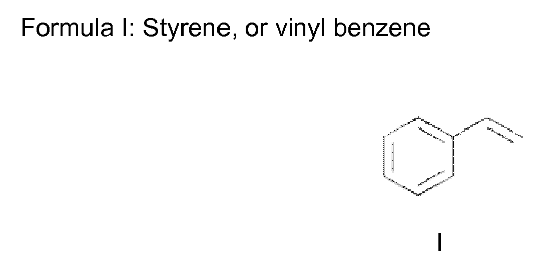

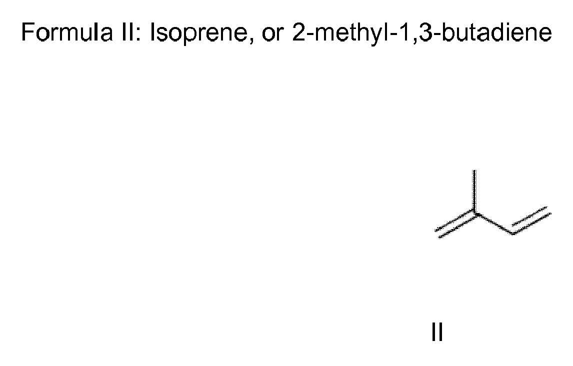

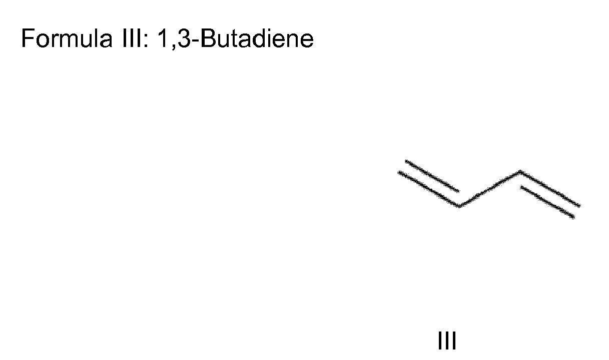

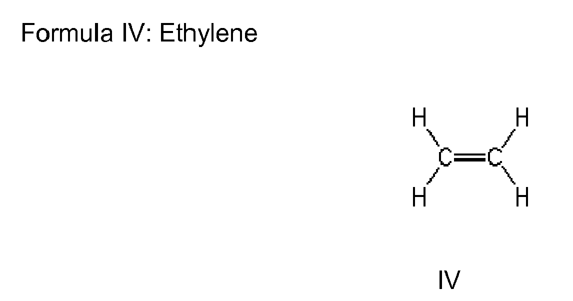

A mixture of a homopolymer and a block copolymer is suitably in the in the range of 1:10 ―10:1 (w/w), more suitably in the range 1:5 ― 5:1 (w/w), preferably in the range 1:2 ― 2:1 (w/w), and especially around 1:1 (w/w).

Homopolymers and/or block copolymers suitably have an average chain length in the range of 10 ― 10¹² repeating units, preferably in the range 10³ to 10⁹ repeating units.

It has been found that it is possible to bond all type of bituminous membranes, whether or not modified with one or more rubbery copolymer usually used to modify bitumen such as SIS, SBS, SEBS, SB or APP to practically all types of facings, whether or not with e.g. sand, polyolefin film or non-woven materials. It was found that exceptional mechanical performance was obtained in association with bitumen modified polymer.

It has been found that the especially favourable properties with respect to bonding are obtained when the bituminous membrane or layer comprises bitumen comprising aromatic oil as the asphalt oil constituent or bitumen modified with styrene containing copolymers such as SIS, SBS, SEBS or SB.

Without limiting the invention to any specific hypothesis it is assumed that this effect is to be ascribed to an especially favourable interaction between the composition comprising a styrene-domain-containing polymer and a bituminous membrane or layer modified with SIS, SBS, SEBS or SB in a manner known per se.

It was found that solutions of styrene-domain-containing polymers or copolymers are suitable for bonding of bitumen membranes in waterproofing systems as an open time of 2 to 15 minutes, suitably 10 to 15 minutes, allowing both surfaces (membranes / substrates) to be adhered together is obtained.

Suitable solvents to be used according to the invention are from the group consisting of liquid linear, branched and cyclic hydrocarbon solvents, ether-type solvents, and ketone-type solvents and mixtures thereof.

Hydrocarbon solvents are suitably C₅-C₁₈ alkanes, preferably low boiling alkanes such as pentane and preferably hexane.

Ether-type solvents are suitably based on C₁-C₁₈ alkanes and are preferably symmetric ethers such as diethyl ether and preferably dimethyl ether.

Ketone solvents are suitably based on C₁-C₁₈ alkanes and are preferably symmetric ketones such as diethyl ketone and preferably acetone.

In a preferred embodiment of the invention the solvent selected from the group consisting of hexane, dimethyl ether, and acetone and mixtures thereof.

A solvent in the form of a mixture of hexane, and dimethyl ether and optionally acetone has been found very suitable.

In order to accelerate the evaporation of the solvent it is preferred to use a composition also comprising dimethyl ether.

It has been found that a mixture of solvents constituted of:
20-60% (w/w) hexane, 20-60% (w/w) dimethyl ether and
0-10 % (w/w) acetone, wherein the aggregate of hexane, dimethyl ether and acetone is 100 % is especially suitable for the purpose of the present invention.

The mixture of solvents suitably comprises 30-55% (w/w) hexane, more preferred 40-50 % (w/w) hexane, 30-55% (w/w) dimethyl ether, more preferred 40-50 % (w/w) dimethyl ether, and 0.5-8% (w/w) acetone, more preferred 1-5 % (w/w) acetone, wherein the aggregate of hexane, dimethyl ether, and acetone is 100 %.

The composition suitably comprises 10-50% (w/w) styrene-domain-containing polymer or copolymer, preferably 20-40% (w/w) styrene-domain-containing polymer or copolymer and more preferred 25-45 % (w/w).

In one embodiment a composition comprising a styrene-domain-containing polymer or copolymer to be used in the present invention consists of
(a) 20-35 % (w/w) styrene-domain-containing polymer or copolymer;
(b) 35-50 % (w/w) hexane;
(c) 25-40 % (w/w) dimethyl ether; and
(d) 1-5 % (w/w) acetone;
wherein the aggregate of (a), (b), (c), and (d) is 100 %.

Typically, the viscosity of the solution is approximately 1000 centipoises allowing application using conventional spraying systems, and the final adjustment of the solution is a matter of routine for the skilled in the art.

In one embodiment of the invention the spray adhesive is applied to both surfaces which are to be adhered to each other.

In another embodiment of the invention the spray adhesive is sprayed on the site on only one of the 2 parts (membrane and substrate), the second part being delivered from the manufacturer with the adhesive pre-deposited at the surface and protected with a release film or paper,

As an alternative embodiment the pre-deposited adhesive is not necessary the same spray adhesive as is used at the site but can be a standard bituminous self-adhesive or other bitumen blend recipe adhesives.

In a further embodiment of the invention 2 parts (membrane, substrate) are delivered from the manufacturer with the spray adhesive pre-deposited at the surface and protected with a release film or paper in which case the only work to be done at the construction site is to remove the release film or papers and bring the two parts into contact.
It is contemplated that in accordance with the present invention the composition may be applied to the surface by brushing or by spraying the composition being pressurized using a pump or by using a propellant gas, such as a hydrocarbon being volatile at the application temperature, a haloalkane, nitrous oxide, or carbon dioxide.

In a second aspect the invention relates to a method of bonding a bituminous membrane or layer modified with a polymer or copolymer to a substrate composed from one or more materials selected from the group consisting of a bituminous membrane or layer, synthetic and plastic membranes, insulation boards made from materials such as PUR, PIR, EPS, mineral or glass wool, concrete, cement, brick, wooden boards, or steel panels, said method comprising the steps of:
(i) applying to one or both surfaces to be bonded together a composition comprising a styrene-domain containing polymer or copolymer dissolved in a bitumen-compatible solvent;
(ii) waiting for about 2 to 15 minutes;
(iii) bringing the surfaces into intimate contact; and optionally
(iv) applying a pressure to bring the bituminous membrane or layer modified with a polymer or copolymer into intimate contact with the substrate.

Suitable solvents to be used in the method of the invention are from the group consisting of liquid linear, branched and cyclic hydrocarbon solvents, ether-type solvents, and ketone-type solvents and mixtures thereof as stated above.

In one embodiment of the method of the invention the composition is applied both to the surface of the bituminous membrane or layer modified with a polymer or copolymer and to the surface of the substrate to which the bituminous membrane or layer is to be bonded.

According to the invention it is also possible to apply the composition to either the surface of the bituminous membrane or layer modified with a polymer or copolymer or to the surface of the substrate to which the bituminous membrane is to be bonded.
The composition may suitably be applied to the surface by brushing or by spraying, e.g. by spraying a pressurized composition in a manner known per se. The composition may e.g. be pressurized using a pump or by using a propellant gas, such as a hydrocarbon being volatile at the application temperature, a haloalkane, nitrous oxide, or carbon dioxide.

In a further aspect the invention relates to a construct comprising a bituminous membrane or layer modified with a polymer or copolymer bonded to a substrate by a styrene-domain-containing polymer or copolymer dissolved in a bitumen-compatible solvent.

### Description of the Preferred Embodiments

The invention is now explained more in detail with reference to the drawings showing an embodiment of a construct according to the invention.

In this embodiment a substrate 1 which e.g. may be a building structure such as a concrete, wood or steel deck is provided with a vapour control layer 3 such as a bituminous or synthetic or plastic membrane or a laminate of aluminum and kraft, an insulation board 4 such as PUR, PIR, EPS, mineral wool or glass wool and bituminous membranes 5,5' having a side-lap or overlap. The layers of the construct have been bonded using a spray adhesive 2 applied to the various surfaces to be bonded together.

### EXAMPLE 1

### Comparison of bonding strength obtained using adhesive spray and torching

The bonding performance of the spray adhesive is described as a result of a peeling force obtained by determining the bond strength obtained between 2 layers of bituminous membranes without any facing (naked bituminous blend comprising SBS) by applying a spray adhesive between as compared to the bond strength obtained when bonding corresponding layers using the standard torching technique with a gas burner.

The tested spray adhesive was a composition commercially available under the Trade Name StarStuk™ SG Canister (NorthStar Chemicals).

The bonding was tested in a standard peeling test after 1 day, and the results are stated in the below Table.

| | | |
|---|---|---|
| Peeling test 180°angle At 23°C | **Spray adhesive** | 253 N/5cm |
| | **Torching** | 230 - 310 N/5cm |

It is noted that the bonding performance obtained with the spray adhesive is surprisingly good when adhering naked SBS bituminous blend to itself. The bonding strength was similar level to the standard performance obtained with torching. In other words, the spray adhesive behaves as if the contact at bitumen layers interface is so intimate that some kind of fusion can occur.

### EXAMPLE 2

GPC Analyses of molecular weight distributions a styrene-domain-containing polymer or copolymer for forming a spray adhesive and a bituminous blend comprising SBS as used in Example 1.

GPC analyses of the spray adhesive and bitumen SBS membrane show matching 2-peak molecular weight distributions, i.e. a peak of highest Mw in the adhesive placed in the same Mw range as SBS polymer (100 000 - 1 000 000 daltons), which further fits very well to the peak at 100 000 daltons typical for linear SBS, known to be very compatible with bitumen, and a peak of lowest Mw in the adhesive fitting to the rather broad Mw distribution of bitumen (100 - 10 000 daltons).

Without limiting the invention to any specific theoretical explanation it is believed that the GPC 2-peak Mw distribution of the polymer of the spray adhesive corresponding to the rather broad Mw distribution of bitumen and a peak of a polymer used for modifying the bitumen is responsible for the high compatibility between the adhesive and the polymer modified bitumen. Hence, in the broadest aspect the invention relates to the use of a composition comprising one or more polymers or copolymers having a Mw distribution showing a peak fitting to the rather broad Mw distribution of bitumen as determined by GPC analysis, insofar as they also comprise another higher Mw peak which is retrieved in a polymer or copolymer being suitable for modifying bitumen, dissolved in a bitumen-compatible solvent for bonding a bituminous membrane or layer modified with the polymer or copolymer to a substrate composed from one or more material(s) selected from the group consisting of bituminous membranes and layers, made from materials such as PUR, PIR, EPS, mineral or glass wool, concrete, cement, brick, wooden boards, or steel panels.

### Summary Listing of References

US 2002/01161056 (Westech Aerosol Corporation)
HU-A-51662 (Akvaline Szigetelolemezipari RT)
DD-A-271338 (Bitumen Arnstadt VeB)
DD-A-295179 (Bitumen Arnstadt VeB)
US-A-2002/0161056 (Carnahan David W)
BE-A-1010685 (Hoof N V Naamloze Vennootschap)
RU-C-2087507 (Sanzharovski A T)
North Star Chemicals: "StarStuck SG"
FR 1 459 529 (Villadsens FAB AS Jens)

## Claims

1. Use of a composition comprising a styrene-domain-containing polymer or copolymer dissolved in a bitumen-compatible solvent for bonding a bituminous membrane or layer to a substrate composed from one or more material(s) selected from the group consisting of bituminous membranes and layers, made from materials such as PUR, PIR, EPS, mineral or glass wool, concrete, cement, brick, wooden boards, or steel panels, wherein the bituminous membrane or layer comprises bitumen modified with a styrene-domain-containing polymer or copolymer such as SIS, SBS, SEBS or SB.

2. Use according to claim 1, wherein the substrate is composed from one or more material(s) selected from the group consisting of bituminous membranes and layers, synthetic and plastic membranes, insulation boards made from materials such as PUR, PIR, EPS, mineral or glass wool, concrete, cement, brick, wooden boards, or steel panels.

3. Use according to claims 1 or 2, wherein the solvent is selected from the group consisting of saturated or unsaturated hydrocarbon solvents, ether-type solvents, and ketone-type solvents and mixtures thereof.

4. Use according to claim 3, wherein the solvent is selected from the group consisting of hexane, dimethyl ether, and acetone and mixtures thereof.

5. Use according to claim 4, wherein the solvent is a mixture of hexane, and dimethyl ether and optionally acetone

6. Use according to claim 5, wherein the mixture of solvents is constituted of:
(a) 20-60% (w/w) hexane;
(b) 20-60% (w/w) dimethyl ether; and
(c) 0-10 % (w/w) acetone,
wherein the aggregate of (a), (b), and (c) is 100 %.

7. Use according to any one of claims 1-6, wherein the composition comprises 10-50% (w/w) of styrene-domain-containing polymer or copolymer.

8. Use according to any one of claims 1-7, wherein the composition is applied to the surfaces of the materials to be bonded together by brushing or by spraying a composition being pressurized using a pump or by using a propellant gas, such as a hydrocarbon being volatile at the application temperature, e.g. a haloalkane, nitrous oxide, or carbon dioxide.

9. A method of bonding a bituminous membrane or layer modified with a polymer or copolymer to a substrate, said method comprising the steps of:
(i) applying to one or both surfaces to be bonded together a composition comprising a styrene-domain containing polymer or copolymer dissolved in a bitumen-compatible;
(ii) waiting for about 2 to 15 minutes;
(iii) bringing the surfaces into intimate contact; and optionally
(iv) applying a pressure to bring the bituminous membrane or layer into intimate contact with the substrate.

10. The method according to claim 9, wherein the substrate is composed from one or more material(s) selected from the group consisting of bituminous membranes and layers, synthetic and plastic membranes, insulation boards made from materials such as PUR, PIR, EPS, mineral or glass wool, concrete, cement, brick, wooden boards, or steel panels.

11. The method according to claim 9 or 10, wherein the bituminous membrane or layer comprises bitumen modified with a styrene-domain-containing polymer or copolymer such as SIS, SBS, SEBS or SB.

12. The method according to any of claims 9 -11 , wherein the solvent is selected from the group consisting of saturated or unsaturated hydrocarbon solvents, ether-type solvents, and ketone-type solvents and mixtures thereof.

13. The method according to claim 12 wherein the solvent is selected from the group consisting of hexane, dimethyl ether, and acetone and mixtures thereof.

14. The method according to claim 9, wherein the composition is applied both to the surface of the bituminous membrane or layer modified with a polymer or copolymer and to the surface of the substrate to which the bituminous membrane or layer is to be bonded.

15. The method according to claim 9, wherein the composition is applied to either the surface of the bituminous membrane or layer modified with a polymer or copolymer or to the surface of the substrate to which the bituminous membrane is to be bonded.

16. The method according to claim 14 or 15, wherein the composition is applied to the surface of the materials to be bonded together by brushing or by spraying a composition being pressurized using a pump or by using a propellant gas, such as a hydrocarbon being volatile at the application temperature, a haloalkane, nitrous oxide, or carbon dioxide.

17. The method according to any of claims 14-16, wherein the composition is applied during the manufacturing of the bituminous membranes and then covered by a release film or release paper.

18. A construct comprising a bituminous membrane or layer modified with a polymer or copolymer bonded to a substrate by a styrene-domain-containing polymer or copolymer dissolved in a bitumen-compatible solvent.
